**Europäisches Patentamt**

**European Patent Office**

**Office européen des brevets**

(19)

(11) Veröffentlichungsnummer : **0 364 020 B1**

(12)

# EUROPÄISCHE PATENTSCHRIFT

(45) Veröffentlichungstag der Patentschrift :
**30.12.92 Patentblatt 92/53**

(51) Int. Cl.⁵ : **F03D 3/06**

(21) Anmeldenummer : **89202445.6**

(22) Anmeldetag : **22.09.89**

(54) **Windgetriebener Rotor.**

Verbunden mit 89910622.3/0389608
(europäische
Anmeldenummer/Veröffentlichungsnummer)
durch Entscheidung vom 27.02.91.

(30) Priorität : **03.10.88 DE 3833607**
**17.03.89 DE 3908880**
**08.05.89 DE 3915027**
**24.05.89 DE 3916985**

(43) Veröffentlichungstag der Anmeldung :
**18.04.90 Patentblatt 90/16**

(45) Bekanntmachung des Hinweises auf die
Patenterteilung :
**30.12.92 Patentblatt 92/53**

(84) Benannte Vertragsstaaten :
**AT BE CH DE ES FR GB GR IT LI NL**

(56) Entgegenhaltungen :
**EP-A- 0 095 600**
**WO-A-82/02747**
**BE-A- 890 537**

(56) Entgegenhaltungen :
**DE-A- 3 017 357**
**DE-A- 3 234 170**
**DE-A- 3 730 401**
**FR-A- 2 285 527**
**FR-A- 2 345 600**
**FR-A- 2 435 613**
**US-A- 1 740 596**
**US-A- 1 835 018**
**US-A- 4 130 380**
**US-A- 4 207 026**
**US-A- 4 236 866**
**US-A- 4 293 279**
**US-A- 4 561 826**

(73) Patentinhaber : **Moser, Josef**
**Erlenstrasse 2**
**W-8058 Pretzen (DE)**

(72) Erfinder : **Moser, Josef**
**Erlenstrasse 2**
**W-8058 Pretzen (DE)**

(74) Vertreter : **Gossel, Hans K., Dipl.-Ing.**
**Lorenz-Seidler-Gossel et al**
**Widenmayerstrasse 23**
**W-8000 München 22 (DE)**

EP 0 364 020 B1

**Beschreibung**

Die Erfindung betrifft einen durch Windkraft antreibbaren Rotor mit vertikaler Drehachse und radialen an dieser befestigten, in gleichen Winkelabständen über den Umfang verteilten Rotorarmen, die Körper mit einem aerodynamischen Profil bilden oder in der Weise tragen, daß eine Profilseite bei senkrechter Anströmung durch den Wind einen geringeren Luftwiderstand als bei Anströmung von der entgegengesetzten Seite aufweist, wobei die Rotorarme aus einer oder mehreren, in vertikalen Ebenen liegenden Schlaufen mit einem aerodynamischen Profil bestehen, wobei die Profilform über die gesamte Länge der Schlaufe im wesentlichen konstant gehalten wird.

Bei den gegenwärtigen Bemühungen, die Windkraft zur Energiegewinnung zu benutzen, werden gegenwärtig üblicherweise Rotoren mit horizontaler Drehachse unter radialen Rotorarmen eingesetzt, die nach dem Windmühlen- oder Propellerprinzip arbeiten. Die Nachteile dieser Rotoren liegen insbesondere in einer großen Geräuschentwicklung und einem großen benötigten Investitionsaufwand, der sich aus der Notwendigkeit ergibt, hohe Türme für deren Installation vorzusehen. Weiterhin bedingen diese bekannten Windrotoren mit horizontaler Drehachse, daß Stromgewinnungsaggregate oder dergleichen oben auf dem Turm angebracht werden müssen, wenn nicht aufwendige Transmissionen vorgesehen werden.

Ein weiterer Nachteil von Windrotoren mit horizontaler Drehachse ist es, daß diese nur arbeiten können, wenn sie senkrecht von dem Wind angeströmt werden. Dies bedingt, daß die Rotoren durch besondere Einrichtungen immer in den Wind gedreht werden müssen.

Weiterhin ist die Profilierung der bekannten Rotoren schwierig und aufwendig, so daß sich diese üblicherweise nur mit hohen Kosten herstellen lassen.

Rotoren der eingangs angegebenen Art sind beispielsweise als Darrieus-Rotoren bekannt. Diese Rotoren bestehen aus etwa hyperbolisch gekrümmten Rotorblättern, die an einer vertikalen Drehachse befestigt sind. Diese Rotoren sind jedoch grundsätzlich nicht selbststartend. Das bedeutet, daß sie durch einen Servomotor angeworfen werden müssen. Einen Darrieus-Rotor mit einem luftbetriebenen Hilfsrotor zum Andrehen des Hauptrotors zeigt FR-A-2 285 527. Darüberhinaus wird bei Verwendung von Darrieus-Rotoren erst ab Windgeschwindigkeiten von 5 m/s nennenswert Leistung abgegeben.

Weiterhin ist als Vertikalrotor der sogenannte Savonius-Rotor bekannt. Dieser Rotor weist jedoch eine sehr große Windangriffsfläche auf, so daß er sehr sturmgefährdet ist. Daher wird er hauptsächlich im kleinen als Entlüfter für den Innenraum von geschlossenen Transportfahrzeugen verwendet, auf deren Dach er angebracht ist.

Rotoren der eingangs angegebenen Art sind auch zum Messen von Windstärken bekannt. Das gattungsgemäße aerodynamische Profil wird bei diesen durch offene Halbkugelschalen gebildet. Auch diese Rotoren bieten dem Wind eine große Angriffsfläche, so daß sie nicht im großen Maßstab zur Erzeugung von Energie geeignet sind.

Aus der DE 3 517 752 C 2 ist ein Windfangblatt für eine um eine vertikale Achse drehbare Horizontalturbine bekannt. Dieses Windfangblatt besteht aus zwei in radialer Richtung im Abstand nebeneinander angeordneten, durch Stege verbundene, einen Durchströmkanal begrenzenden Flügelprofilen. Die beiden Flügelprofile sind mit ihren Außenflächenkonturen als Teile der Außenflächenkontur eines dicken, selbstanlaufenden Flügelprofils ausgebildet und die Flügelprofile begrenzen mit ihren in Druckströmrichtung gerade verlaufenden und zueinander parallelen oder angenähert parallel angeordneten Innenflanken den zuvor genannten Durchströmkanal. Dieser vorbekannte Vertikalrotor ermöglicht zwar im Unterschied zu den Darrieus-Rotor ein Selbstanlaufen schon bei verhältnismäßig niedrigen Windgeschwindigkeiten. Jedoch wird durch den zwischen den beiden Flügelprofilen gebildeten Durchströmkanal der Vertikalrotor bei seinem Umlauf unnötig abgebremst. Darüber hinaus ist die Auslegung dieses Rotors aufgrund der komplizierten Durch- und Umströmungsbedingungen sehr kompliziert und an die Fertigung der Rotorblätter, insbesondere der Anordnung der Flügelprofile zueinander, werden sehr hohe Anforderungen gestellt.

Aus der US-PS 4 430 044 ist eine gattungsgemäße Vertikalwindturbine bekannt, bei der waagerechte Rotorarmteile und an deren Enden senkrecht zu diesen stehende senkrechte Rotorarmteile vorgesehen sind. Bei der aus diesem Stand der Technik vorbekannten Anordnung der Rotorblätter ist es, insbesondere zum Selbstanlaufen des Rotors, notwendig, die Ausrichtung der Rotorblatteile zum Wind verstellbar auszugestalten. Dazu ist gemäß diesem vorbekannten Stand der Technik eigens eine aufwendige Steuervorrichtung vorgesehen. Das Betreiben dieser vorbekannten Vertikalturbine fordert darüber hinaus eine Steuerung des Anstellwinkels der Rotorblätter während des Betriebs, so daß eine eigene Steuerung vorzusehen ist. Derartige Vertikalrotoren eignen sich demzufolge nicht für den Selbstbau bzw. für den Einsatz in Entwicklungsländern, da es gerade dort darauf ankommt, möglichst einfach aufgebaute Rotoren ohne komplizierte Steuerung an die Hand zu geben.

Aus der DE 3 529 474 A 1 ist eine zusammenlegbare Vertikalwindmühle bekannt. Diese weist vier Hauptflügel auf, die in einer rhombischen Form zueinander angeordnet sind. Zur Funktionsfähigkeit dieser Vertikalwindmühle sind neben den Hauptflügeln Hilfsflügel vorzusehen. Darüber hinaus sind die einzelnen Flügelarme auf Wellen angeordnet, die an den Eckpunkten des Rotors gelenkig miteinander verbunden sind. Durch diese Gelenkverbindungen sind in dem Gesamtrotor Schwächungsstellen gebildet, die die Stabilität der Gesamtvertikalwindmühle negativ beeinträchtigen. Darüberhinaus ist auch für diese Vertikalwindmühle eine aufwendige Steuerung notwendig.

Aus der US-PS 4 561 826 ist ein Vertikalwindrotor bekannt, dessen Rotorarme während der Rotordrehung um die horizontale Achse in derart verschwenkbar sind, daß die Rotorarme von einer Ausrichtung schräg zur vertikalen Achse zur waagerechten hin ausgelenkt werden. Das bedingt einen komplexen Aufbau des Gesamtrotors oder die Verwendung von einerseits flexiblen und elastischen und andererseits dauerbeanspruchungsbeständigen Werkstoffen für die Herstellung der Rotorarme.

Aufgabe der Erfindung ist es, einen einfach aufgebauten und mit geringen Investitionskosten herstellbaren Rotor der eingangs angegebenen Art zu schaffen, dessen Wirkungsgrad so hoch ist, daß er sich wirtschaftlich zur Gewinnung von Windenergie einsetzen läßt, und der die vorstehend angegebenen Nachteile vermeidet.

Erfindungsgemäß wird diese Aufgabe bei einem Rotor der gattungsgemäßen Art dadurch gelöst, daß die Schlaufen, ausgehend von dem Bereich der vertikalen Rotorwelle oder der auf dieser befestigten Nabe, aus winkelig eingestellten Schenkeln bestehen, deren radiale äußere Bereiche durch bogenförmig gekrümmte Profilstreifen miteinander verbunden sind und daß mehrere, ineinanderliegende Profilschaufeln dieselben Schenkel besitzen und dadurch gebildet sind, daß die inneren Schlaufen gekrümmte Profilstreifen aufweisen, die einen geringeren Abstand von der Drehachse besitzen. Durch dieses Ineinanderliegen mehrerer Schlaufen kann die Energieausbeute gegenüber herkömmlichen windgetriebenen Rotoren erheblich vergrößert werden, da die angeströmten Rotorflächen vergrößert werden. Weiterhin wird durch die Ineinanderschachtelung mehrerer Schlaufen die Stabilität der Rotorarme erhöht. Die Rotorarme sind zweckmäßigerweise symmetrisch zu einer durch die Nabe gelegten, radialen Ebene angeordnet. In dieser Schnittebene weisen die Profile der Rotorarme aerodynamische Profile, und zwar vorzugsweise tropfenförmige oder stromlinienförmige Profile auf.

Zweckmäßigerweise bestehen die Schlaufen aus ausgehend von dem Bereich der Nabe winkelig divergierenden Schenkeln, deren radialen äußeren Bereiche durch bogenförmig gekrümmte Profilstreifen miteinander verbunden sind. Diese Ausgestaltung führt dazu, daß ein günstiges Drehmoment nicht nur aus der Differenz der Momente gegenüberliegender Rotorarme erzeugt wird, sondern eine zusätzliche Antriebskraft ergibt sich aus der Schräganströmung der Profile, so daß auch in den Bereichen durch die Rotorarme auf die Rotorwelle übertragene Momente erzeugt werden, in denen die Rotorarme schräg zur Strömungsrichtung des Windes stehen.

Zweckmäßigerweise verlaufen die winkelig zueinander stehenden Schenkel im wesentlichen geradlinig. Dabei können um 180° gegenüberliegende Schenkel der Rotorarme die Form eines liegenden flachen X aufweisen.

Nach einer zweiten Ausführungsform des erfindungsgemäßen Rotors ist vorgesehen, daß die Rotorarme in zu die Drehachse schneidenden vertikalen Ebenen kurvenförmig gekrümmt sind. Zweckmäßigerweise weisen die Rotorarme etwa einen sinusförmigen Kurvenverlauf auf. Dabei können die Rotorarme im Bereich konvexer, nach oben gekrümmter Scheitel an die Drehachse oder mit dieser verbundenen Nabe befestigt sein.

Zweckmäßigerweise nimmt der sinusförmige Kurvenverlauf der Rotorarme radial nach außen in seiner Amplitude ab. Der Kurvenverlauf hat somit etwa die Form einer gedämpften Sinus-Schwingung. Diese Ausgestaltung hat den Vorteil, daß die anströmbare Fläche dadurch vergrößert wird, daß der auftreffende Wind Teile des Rotors trifft, die nicht im Windschatten vorhergehender Teile liegen. Auch bei dieser Ausgestaltung ergibt sich bei schräg zum Wind stehenden Rotor aufgrund der Schräganströmung der Profile ein zusätzliches Drehmoment.

Zweckmäßigerweise sind auf einer Welle im vertikalen Abstand mehrere Arme befestigt.

Ausführungsbeispiele der Erfindung werden nachstehend anhand der Zeichnung näher erläutert.

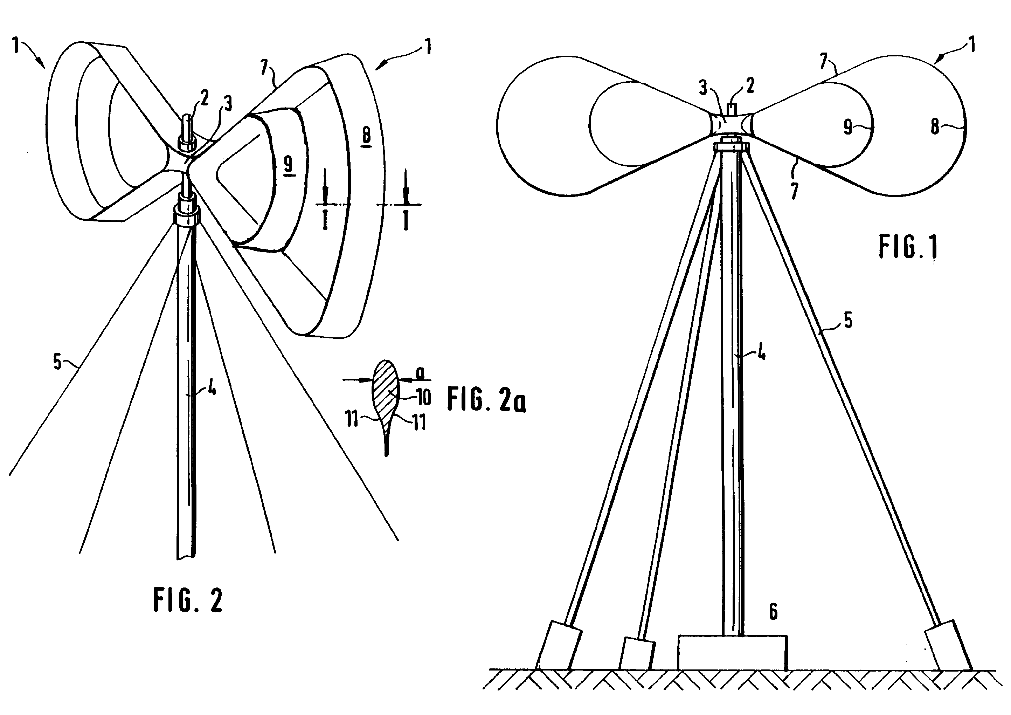

Fig. 1 zeigt einen Rotor, dessen beide um 180° zueinander versetzten Rotorarme 1 an einer vertikalen Welle 2 über eine die Rotorarme tragenden Nabe 3 befestigt sind. Die Rotorwelle 2 ist in einem vertikalen Turm 4 gelagert, der in bekannter Weise durch Streben oder Seile 5 abgespannt ist. In einem am Boden angeordneten Raum 6 können Aggregate oder dergleichen angeordnet sein. Die Höhe des Rotormastes 4 ist beliebig und kann beispielsweise 40 bis 50 m vertragen.

Der Durchmesser des Rotors wird in geeigneter Weise gewählt und kann je nach den durchschnittlichen Windverhältnissen am Standort beispielsweise 10 bis 20 m oder auch mehr betragen.

Die Rotorarme 1 bestehen aus winkelig zueinander angeordneten Profilschenkeln 7, deren äußeren Endbereiche durch ein etwa kreisbogenförmiges Profilteil 8 miteinander verbunden sind. In die derart gebildete Schlaufe ist eine weitere Schlaufe dadurch eingelegt, daß mit den Schenkeln 7 ein etwa kreisbogenförmiges Profilstück 9 verbunden ist, dessen radialer Abstand zur Rotorwelle geringer ist. Die kreisbogenförmigen Profilteile 8 und 9 bestehen zweckmäßigerweise aus vorgefertigten Profilen, die zur Endmontage nur noch auf die Profilschenkel aufgesteckt werden müssen.

Wie aus Fig. 2 ersichtlich ist, sind die Rotorarme 1 in einer vertikalen durch die Drehachse verlaufenden Ebene angeordnet. Die Rotorarme bestehen aus Profilstreifen, deren Querschnitt in Fig. 2 a, die einen Schnitt längs der Linie I-I in Fig. 2 zeigt, angeordnet ist. Die Profilstreifen bestehen also aus einem stromlinienförmigen Profil, das zu seiner Längsmittellinie 10 symmetrisch ist. Das Profil weist in seinem vorderen Bereich seinen dicksten Durchmesser (a) auf. Es läuft in der angedeuteten Weise spitz aus. Zwischen dem dicksten Durchmesser (a) und dem spitzauslaufenden Endbereich ist das Profil mit konkav nach innen gekrümmten Flanken 11 versehen.

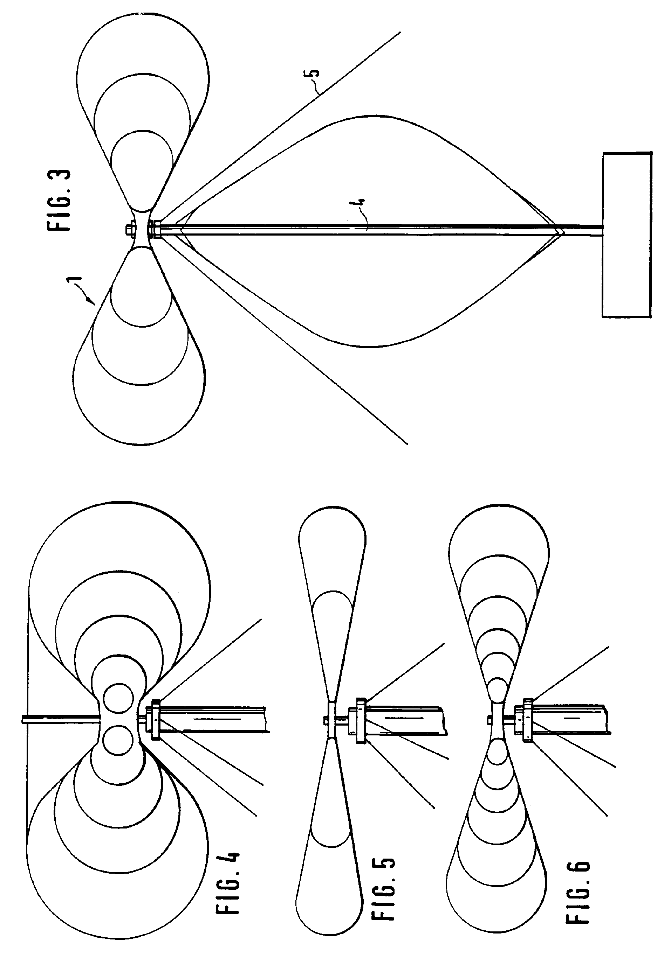

Fig. 3 zeigt ein Ausführungsbeispiels eines Rotors mit um 180° versetzten Armen, die durch drei ineinanderliegende Schlaufen gebildet sind.

Die Figuren 4 bis 6 zeigen weitere Ausführungsbeispiele von Rotoren, die aus zwei oder mehr ineinanderliegende Schlaufen gebildet sind.

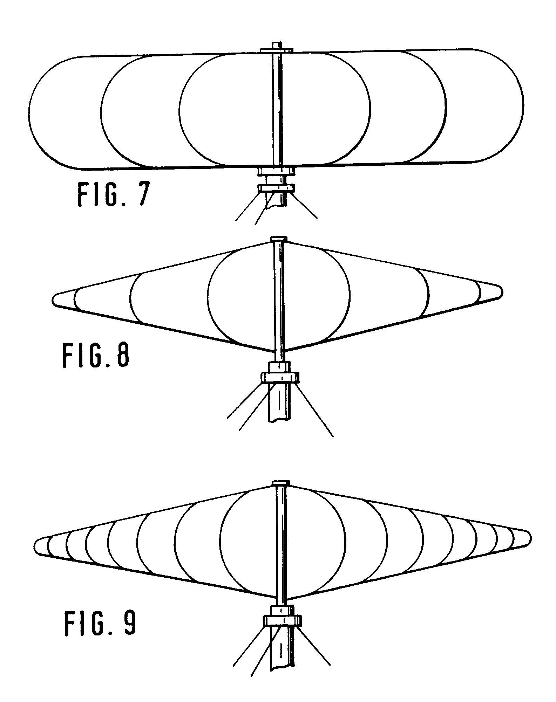

Die Figuren 7 bis 9 zeigen Beispiele von schlaufenförmigen Rotorblättern, deren Schenkel parallel zueinander oder nach außen hin konvergierend verlaufen.

Sämtlichen erfindungsgemäßen Rotoren ist es gemeinsam, daß sie aus einfach herzustellenden vorgefertigten Teilen bestehen. Die jeweiligen Einzelteile können dabei beispielsweise aus gebogenem Blech oder aber auch aus einem Karbonverbundstoff, der insbesondere hochfeste Eigenschaften aufweist, etc. bestehen. Dadurch ist beim Aufbau der Vertikalrotoren eine einfache Bauweise gewährleistet. Durch die Aufbaumöglichkeit im Baukastenstil ist eine individuelle Anpassung der Rotorform an die lokalen Windverhältnisse möglich. Dabei wird keine komplizierte Regelung erforderlich, da die Vertikalrotoren robust ausgeführt sind. Aufgrund dieser Eigenschaften eignen sich die Vertikalrotoren insbesondere zum Einsatz in Entwicklungsländern, in denen einerseits keine Fertigungsmöglichkeiten für komplizierte Steuermechanismen und dergleichen existiert und andererseits kein Fachpersonal zur Wartung von technologisch hochgezüchteten Maschinen oder Apparaten vorhanden ist.

Von weiterem Vorteil ist, daß die vorbeschriebenen Vertikalrotoren nahezu geräuschlos sind.

**Patentansprüche**

1. Durch Windkraft antreibbarer Rotor mit vertikaler Drehachse und radialen an dieser befestigten, in gleichen Winkelabständen über den Umfang verteilten Rotorarmen, die Körper mit einem aerodynamischen Profil bilden und in der Weise tragen, daß eine Profilseite bei senkrechter Anströmung durch den Wind einen geringeren Luftwiderstand als bei Anströmung von der entgegengesetzten Seite aufweist, wobei die Rotorarme aus in vertikalen Ebenen liegenden Schlaufen mit einem aerodynamischen Profil bestehen, wobei die Profilform über die gesamte Länge der Schlaufe im wesentlichen konstant gehalten wird,

**dadurch gekennzeichnet,**

daß die Schlaufen, ausgehend von dem Bereich der vertikalen Rotorwelle oder der auf dieser befestigten Nabe, aus Schenkeln bestehen, deren radialen äußeren Bereiche durch bogenförmig gekrümmte Profilstreifen miteinander verbunden sind, und daß mehrere ineinanderliegende Profilschlaufen dieselben Schenkel besitzen und dadurch gebildet sind, daß die inneren Schlaufen gekrümmte Profilstreifen aufweisen, die einen geringeren Abstand von der Drehachse besitzen.

2. Rotor nach Anspruch 1, dadurch gekennzeichnet, daß die Schlaufen ausgehend von dem Bereich der vertikalen Rotorwelle oder der auf dieser befestigten Nabe aus winkelig divergierenden Schenkeln bestehen.

3. Rotor nach Anspruch 1 oder 2, dadurch gekennzeichnet, daß die beiden winkelig zueinander angeordneten Schenkel im wesentlichen gerade verlaufen.

4. Rotor nach einem der Ansprüche 1 bis 3, dadurch gekennzeichnet, daß die Schenkel gegenüberliegender Rotorarme die Form eines liegenden, flachen X aufweisen.

**Claims**

1. Rotor driven by wind power with a vertical rotating axis and radial rotor arms mounted thereon which are distributed at uniform angular intervals over its periphery and which form and bear bodies with an aerodynamic profile such that one side of the profile exhibits a lower air resistance with a current at right angles than with a current from the opposite side, wherein the rotor arms consist of loops with aerodynamic profiles, lying in vertical planes, wherein the profile shape is maintained essentially constant over the entire length of the loop,

**characterized in**

that the loops consist of arms diverging from the region of the vertical rotor shaft or the hub attached to this and whose radial outer zones are connected with each other by arc-shaped profile strips, and that several nested profile loops share the same arms and are formed by the inner loops having curved profile strips which have a shorter distance from the rotating axis.

2. Rotor according to claim 1, characterized in that the loops consist of arms diverging at an angle from the region of the vertical rotor shaft or the hub attached thereto.

3. Rotor according to claim 1 or 2, characterized in that the two arms which are arranged at an angle relative to each other are essentially in a straight line.

4. Rotor according to any one of claims 1 to 3, characterized in that the arms of the rotor arms opposed to each other resemble a flat, prone X.

**Revendications**

1. Rotor entraîné par la force éolienne avec un axe rotatif vertical et des bras de rotor radiaux fixés à celui-ci sur toute sa circonférence à distance angulaire identique, qui forment des corps avec un profil aérodynamique et les portent de manière à ce qu'un côté du profil présente une résistance à l'air inférieure lorsque le vent souffle dessus verticalement, que lorsque le vent souffle de la direction contraire, les bras de rotor consistant en des boucles à profil aérodynamique posées en plans verticaux, la forme du profil étant maintenue substantiellement constante sur toute la longueur de la boucle,
caractérisé en ce que
les boucles, partant de la zone de l'arbre de rotor vertical ou du moyeu fixé sur celui-ci, consistent en branches dont les zones extérieures radiales sont reliées entre elles par des bandes de profilé coudées en arc et que plusieurs boucles de profilé, placées les unes dans les autres, possèdent les mêmes branches et sont formées par le fait que les boucles intérieures présentent des bandes de profilé coudées qui ont une distance plus faible par rapport à l'axe rotatif.

2. Rotor selon la revendication 1, caractérisé en ce que les boucles partant de la zone de l'arbre de rotor vertical ou du moyeu fixé sur celui-ci consistent en branches à angles divergents.

3. Rotor selon la revendication 1 ou 2, caractérisé en ce que les deux branches disposées réciproquement dans un angle s'étendent substantiellement en ligne droite.

4. Rotor selon l'une des revendications 1 à 3, caractérisé en ce que les branches de bras de rotor se faisant face ont la forme d'un X plat couché.

FIG.1

FIG.2

FIG.2a

FIG. 3

FIG. 4

FIG. 5

FIG. 6

FIG. 7

FIG. 8

FIG. 9